# EUROPÄISCHE PATENTANMELDUNG

(11) **EP 1 261 089 A1**
(43) Veröffentlichungstag der Anmeldung: **27.11.2002**
(21) Anmeldenummer: 02006878.9
(22) Anmeldetag: 26.03.2002
(51) Int. Cl.: H02B 1/56, H02B 1/30

(54) **Gehäuse mit Gehäuseverkleidungsteilen**

(30) Priorität: 21.05.2001 DE 10124815
(71) Anmelder: SIEMENS AKTIENGESELLSCHAFT, 80333 München (DE)
(72) Erfinder: Buchberger, Georg, 80689 München (DE); Niggl, Heinz-Juergen, 82343 Pöcking (DE)
(74) Vertreter: Berg, Peter, Dipl.-Ing.

(57) **Zusammenfassung**

Gehäuses für elektrische Komponenten mit Gehäuseverkleidungsteilen und mit wenigstens einem von den Gehäuseverkleidungsteilen umfassten Gehäusekörper wobei einander zugewandte Kanten (11') von jeweils unmittelbar benachbarten Gehäuseverkleidungsteilen (11) jeweils einen zwischengeordneten Spalt (14) bilden und zwischen jedem Gehäuseverkleidungsteil (11) und der jeweils zugewandten Anlageseite (12) des Gehäusekörpers (10', 10'') jeweils ein Zwischenraum (13) angeordnet ist, wobei jeder Zwischenraum (13) jeweils durch gleich beabstandete, jeweils parallel zueinander verlaufende Ebenen einer Anlagenseite (12) und des jeweils zugeordneten Gehäuseverkleidungsteils (11) begrenzt wird.

## Beschreibung

Die Erfindung betrifft ein Gehäuse für elektrische Komponenten mit Gehäuseverkleidungsteilen und mit wenigstens einem von den Gehäuseverkleidungsteilen umfassten Gehäusekörper.

Bei derartigen Gehäusen handelt es sich darum, daß ein elektrische oder elektronische Komponenten tragender Gehäusekörper außenseitig von Gehäuseverkleidungsteilen umfasst ist. Dabei weisen einzelne Gehäuseverkleidungsteile Öffnungen zur Kabelausführung oder zur Be- und Entlüftung auf. Unbefriedigend bei diesem Stand der Technik ist, daß dazu jeweils zusätzliche Fertigungsschritte erforderlich sind, so daß je nach Anforderungen unterschiedlich ausgebildete Typen von Gehäuseverkleidungsteilen produziert und auf Lager gehalten werden müssen.

Es besteht daher die Aufgabe, ein Gehäuse zu schaffen, bei dem den jeweiligen Anforderungen entsprechende Öffnungen vorgesehen sind und gleichwohl die Typenvielfalt der Gehäuseverkleidungsteile möglichst gering ist, um dadurch die Herstellungs- und Lagerkosten niedrig zu halten.

Gelöst ist die Aufgabe dadurch, daß die Gehäuseverkleidungsteile zu den jeweils zugewandten Anlageseiten des Gehäusekörpers jeweils derart beabstandet sind, daß einander zugewandten Kanten von jeweils unmittelbar benachbarten Gehäuseverkleidungsteilen jeweils einen zwischengeordneten Spalt bilden.

Charakteristisch für die Erfindung ist mithin, daß zwischen den jeweils parallel verlaufenden Ebenen der Anlageseiten und der Gehäuseverkleidungsteile aufgrund ihres jeweiligen Abstands jeweils Zwischenräume gebildet sind, die sich jeweils an den Kanten der Verkleidungsteile über den jeweils zwischengeordneten Spalt zum Außenraum öffnen. Über diese Öffnungen lassen sich dem Gehäusekörper zugeordnete Kabel nach außen führen. Ferner erfüllen diese Öffnungen die zusätzliche Funktion der Be- und Entlüftung des Gehäusekörpers, so daß sich die im Inneren des Gehäusekörpers von den dort angeordneten Komponenten erzeugte Verlustwärme abführen läßt. Im Gegensatz zum Stand der Technik, bei dem die Öffnungen je nach Anforderungen in zusätzlichen Fertigungsschritten in die entsprechenden Gehäuseverkleidungsteile eingebracht werden, sind bei dem erfindungsgemäßen Gehäuse aufgrund der durch die beabstandete Anordnung der Gehäuseverkleidungsteile inhärenten Spaltöffnungen keine zusätzlichen Öffnungen erforderlich. Dadurch entfallen entsprechende Fertigungsschritte und reduziert sich auch der Umfang der zu produzierenden und auf Lager zu haltenden Typen von Gehäuseverkleidungsteilen deutlich.

Eine zweckmäßige Ausgestaltung der Erfindung kann darin bestehen, daß die Gehäuseverkleidungsteile zu den jeweils zugewandten Anlageseiten des Gehäusekörpers jeweils mit einem einstellbaren Abstand beabstandet sind, so daß das Gehäuse an wechselnde Anforderungen anpaßbar ist.

Eine bevorzugte Ausgestaltung der Erfindung sieht vor, daß die Gehäuseverkleidungsteile zu den jeweils zugewandten Anlageseiten gleichmäßig beabstandet sind. Damit ergibt sich ein im wesentlichen einheitlicher Strömungsquerschnitt an den einzelnen Spalten, so daß eine räumlich gleichmäßige Be- und Entlüftung des Gehäuses möglich ist. Nach einer Weiterbildung der Erfindung sind die Gehäuseverkleidungsteile abnehmbar ausgebildet, um eine schnelle Austauschbarkeit der Teile zu ermöglichen. Besonders vorteilhaft ist es, wenn die Gehäuseverkleidungsteile jeweils gleiche Dimensionen aufweisen, so daß im wesentlichen ein einheitlicher Gehäuseverkleidungstyp für alle Anlageseiten des Gehäusekörpers genügt. Dadurch ergibt sich auch ein gefälliger optischer Effekt. Bei einem kubusförmig ausgebildeten Gehäusekörper weisen die Gehäuseverkleidungsteile quadratische Außenflächen auf.

Anhand der beigefügten Zeichnung soll nachstehend eine Ausführungsform der Erfindung näher erläutert werden. In teilweise stark schematischen Ansichten zeigen:
Fig. 1 eine Schnittansicht eines erfindungsgemäßen Gehäuses, wobei zwischen einem Gehäusekörper und daran außenseitig angeordneten Gehäuseverkleidungsteilen jeweils ein Zwischenraum gebildet ist und an einander angrenzenden Kanten der Gehäuseverkleidungsteilen jeweils ein Spalt zwischengeordnet ist, und
Fig. 2 eine Schnittansicht von zwei übereinander gestapelten Gehäusekörpern.

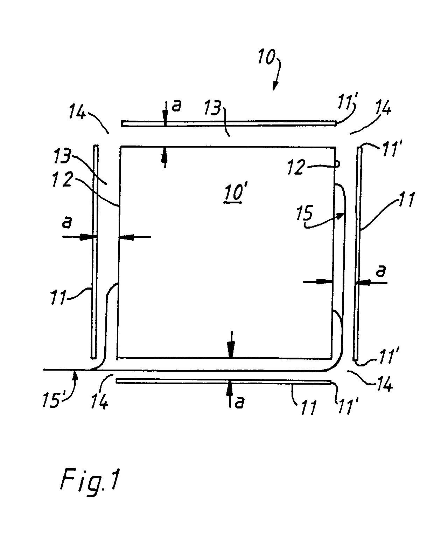

Fig. 1 zeigt ein im ganzen mit 10 bezeichnetes Gehäuse 10, das einen zur Aufnahme von elektrischen und elektronischen Komponenten bestimmten Gehäusekörper 10' aufweist, wobei der Gehäusekörper 10' außenseitig von Gehäuseverkleidungteilen 11 umfasst ist. Dabei ist jeder Außenseite 12 des Gehäusekörpers 10' jeweils ein als Außenwand ausgebildetes Gehäuseverkleidungsteil 11 zugeordnet. Im Ausführungsbeispiel hat der Gehäusekörper 10' eine im wesentlichen quadratische Querschnittsfläche mit einer definierten Kantenlänge der Außenseiten 12, wobei die jeweils zugeordneten Gehäuseverkleidungsteile 11 so dimensioniert sind, daß deren Kantenlängen den Kantenlängen der jeweils zugeordneten Außenseiten 12 des Gehäusekörpers 10' ungefähr entsprechen. Ferner sind die Gehäuseverkleidungsteile 11 an den jeweils zugeordneten Anlageseiten 12 des Gehäusekörpers 10' so angeordnet, daß die jeweils parallel zueinander verlaufenden Ebenen einer Anlageseite 12 und des jeweils zugeordneten Gehäuseverkleidungsteils 11 einen Abstand a aufweisen. Dadurch ist einerseits zwischen einer Anlageseite 12 des Gehäusekörpers 10' und dem jeweils beabstandet zugeordneten Gehäuseverkleidungsteil 11 ein Zwischenraum 13 angeordnet und andererseits bilden die einander zugewandten Kanten 11' von jeweils unmittelbar benachbarten Gehäuseverkleidungsteilen 11 jeweils einen zwischengeordneten langschlitzförmigen Spalt 14. Aus Fig. 1 ist ersichtlich, daß die einzelnen Zwischenräume 13 an den Anlageseiten 12 des Gehäusekörpers 10' gemäß dem Abstand a umlaufend ausgebildet sind und sich jeweils an den Kanten 11' der Gehäuseverkleidungsteile 11 aufgrund des dort jeweils ausgebildeten Spalts 14 zum Außenraum hin öffnen. In den Zwischenräumen 13 lassen sich beispielsweise aus dem Gehäusekörper 10' herausgeführte Kabel 15 so verlegen, daß einzelne aus verschiedenen Anlageabschnitten des Gehäusekörpers 10' herausgeführte Kabel 15 zu einem Kabelstrang 15' innerhalb der einzelnen Zwischenräume 13 zusammengefaßt sind und dieser Kabelstrang 15' an einem Spalt 14 aus den Gehäuseverkleidungsteilen 11 und somit aus dem Gehäuse 10 zu einem Außenraum herausgeführt werden kann. Desweiteren sind die Kabel 15 an jedem beliebigen Spalt 14 aus dem Gehäuse 10 herausführbar. Ferner dient jeder Spalt 14 der Zuführung von Außenluft und der Abführung von im Innern des Gehäusekörpers 10' aufgrund der Verlustleistung der dort angeordneten Komponenten erzeugten Abwärme. Dabei sorgt eine in den Zwischenräumen 13 befindliche Luftschicht für eine entsprechende Konvektion und somit Kühlung im Innern des Gehäusekörpers 10'. Im Ausführungsbeispiel ist der Gehäusekörper 10' im wesentlichen kubusförmig ausgebildet, wobei die Gehäuseverkleidungsteile 11 quadratische Außenflächen aufweisen. Entsprechend den Anlageseiten 12 des in dem Gehäuse 10 aufgenommenen Gehäusekörpers 10' weist das Gehäuse 10 sechs gleich dimensionierte und konfektionierte Gehäuseverkleidungsteile 11 auf, an deren jeweils einander zugewandten Kanten 11' die zugeordneten langschlitzförmigen Spalte 14 als Gehäuseöffnungen zwischengeordnet sind.

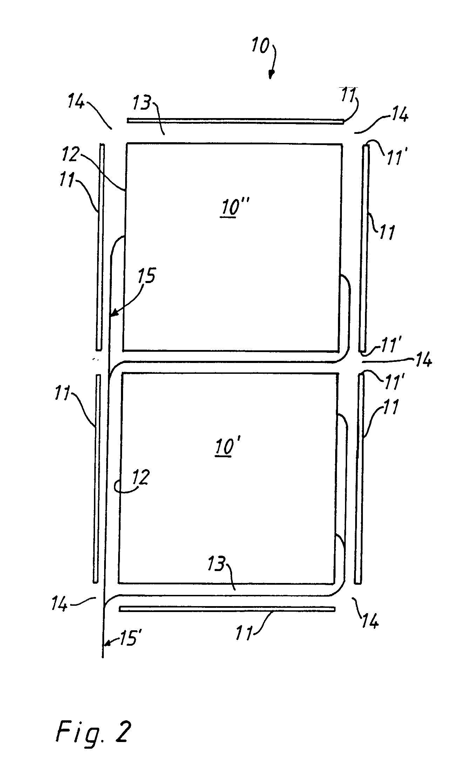

Fig. 2 zeigt eine abgewandtelte Ausführungsform des Gehäuses 10 von Fig. 1, wobei auf den Gehäusekörper 10' von Fig. 1 ein zweiter Gehäusekörper 10'' aufgestapelt ist; beide übereinander gestapelten Gehäusekörper 10', 10'' sind im wesentlichen kubusförmig mit jeweils identischen Außenabmessungen ausgebildet. Bei dieser Ausführungsform kann bei jedem Gehäusekörper 10', 10'' jeweils ein Gehäuseverkleidungsteil 11 eingespart werden, indem an den jeweils einander zugewandten Anlageseiten der beiden Gehäusekörper 10', 10'' die beiden entsprechenden Gehäuseverkleidungsteile durch Abstandshalter ersetzt werden, so daß bei dem unten angeordneten Gehäusekörper 10' das als Gehäusedecke ausgebildete Gehäuseverkleidungsteil 11 und bei dem oben angeordneten das als Gehäuseboden ausgebildete Gehäuseverkleidungsteil 11 weggelassen werden. Einzelne aus den beiden Gehäusekörpern 10', 10'' jeweils herausgeführte Kabel 15 lassen sich vorteilhaft innnerhalb der aufgrund der Beabstandung der Gehäuseverkleidungsteile gebildeten Zwischenräume 13 verlegen, wobei sich dabei die einzelnen Kabel 15 zu einem Kabelstrang 15' zusammenfassen lassen und dieser Kabelstrang 15' an einem Spalt 14 des Gehäuses 10 herausführbar ist. Desweiteren dienen die an den Kanten 11' des Gehäuses 10 verlaufenden Spalte 14 der Zuführung von Außenluft und Abführung von im Inneren der Gehäusekörper 10', 10'' erwärmter Abluft, wobei beispielsweise frische Zuluft an den bodennah angeordneten Spalten 14 einströmen und erwärmte Abluft an deckennah angeordneten Spalten 14 abströmen kann.

## Patentansprüche

1. Gehäuses für elektrische Komponenten mit Gehäuseverkleidungsteilen und mit wenigstens einem von den Gehäuseverkleidungsteilen umfassten Gehäusekörper wobei einander zugewandte Kanten (11') von jeweils unmittelbar benachbarten Gehäuseverkleidungsteilen (11) jeweils einen zwischengeordneten Spalt (14) bilden und zwischen jedem Gehäuseverkleidungsteil (11) und der jeweils zugewandten Anlageseite (12) des Gehäusekörpers (10', 10'') jeweils ein Zwischenraum (13) angeordnet ist, **dadurch gekennzeichnet, dass** jeder Zwischenraum (13) jeweils durch gleich beabstandete, jeweils parallel zueinander verlaufende Ebenen einer Anlagenseite (12) und des jeweils zugeordneten Gehäuseverkleidungsteils (11) begrenzt wird.

2. Gehäuse nach Anspruch 1, **dadurch gekennzeichnet, dass** die Gehäuseverkleidungsteile (11) zu den jeweils zugewandten Anlageseiten (12) des Gehäusekörpers (10', 10'') jeweils mit einem einstellbaren Abstand beanstandet sind.

3. Vorrichtung nach einem der Ansprüche 1 oder 2 **dadurch gekennzeichnet, dass** die Gehäuseverkleidungsteile (11) abnehmbar ausgebildet sind.

4. Vorrichtung nach einem der vorstehenden Ansprüche, **dadurch gekennzeichnet, dass** die Gehäuseverkleidungsteile (11) jeweils gleiche Dimension aufweisen.

5. Vorrichtung nach Anspruch 4, **dadurch gekennzeichnet, dass** die Gehäuseverkleidungsteile (11) quadratische Außenflächen aufweisen.
